# EUROPÄISCHE PATENTANMELDUNG

(11) **EP 1 163 992 A2**
(43) Veröffentlichungstag der Anmeldung: **19.12.2001**
(21) Anmeldenummer: 01112905.3
(22) Anmeldetag: 05.06.2001
(51) Int. Cl.: B29C 45/14

(54) **Kunststoff-Metallverbundbauteil und Verfahren zu seiner Herstellung**

(30) Priorität: 15.06.2000 DE 10029411
(71) Anmelder: BAYER AG, 51368 Leverkusen (DE)
(72) Erfinder: Goldbach, Hubert, 40882 Ratingen (DE); Schauf, Dieter, 42799 Leichlingen (DE)

(57) **Zusammenfassung**

Es wird ein Kunststoff-Metallverbundbauteil beschrieben aus wenigstens zwei metallischen Formteilen (1; 21; 31; 41) und (2; 22; 32; 42), die durch angespritzten thermoplastischen Kunststoff (3) miteinander verbunden sind, dadurch gekennzeichnet, dass im Bereich der Verbindungsstelle (17) der Formteile (1; 21; 31; 41) und (2; 22; 32; 42) die Formteile (1; 21; 31; 41) und (2; 22; 32; 42) mit dem Kunststoff (3) einen Formschluss bilden, dass die Formteile (1; 21; 31; 41) und (2; 22; 32; 42) keinen direkten Kontakt miteinander haben, und dass der Kunststoff (3) eine elektrisch isolierende Schicht zwischen den Formteilen (1; 21; 31; 41) und (2; 22; 32; 42) bildet.

## Beschreibung

Die Erfindung betrifft ein Kunststoff-Metallverbundbauteil aus wenigstens zwei metallischen Formteilen, die durch angespritzten thermoplastischen Kunststoff miteinander verbunden sind, dadurch gekennzeichnet, dass im Bereich der Verbindungsstelle der Formteile die Formteile mit dem Kunststoff einen Formschluss bilden, dass die Formteile keinen direkten Kontakt miteinander haben, und dass der Kunststoff eine elektrisch isolierende Schicht zwischen den Formteilen bildet.

Der formschlüssige Verbund der Komponenten aus unterschiedlichen Werkstoffen, wird durch Umformen eines thermoplastischen Werkstoffes erreicht.

In der Praxis verwendete Verbundbauteile oder Halbzeuge bestehen aus z.B. flächenhaften Verbunden, bei denen z.B. zwei Metallbleche mit Hilfe eines dazwischenliegenden Kunststoffs oder Kunststoffschaums zu einer Sandwich-Struktur verbunden werden (vgl. EP 489 320 A1).Darüber hinaus gibt es Verfahren zur Herstellung von Verbundplatten mit außenliegenden Blechen und innenliegender Rippenstruktur (siehe EP 775 573 A2). Weiterhin gibt es ein Verfahren zum Verbinden von Blechen durch eine Kombination von Pressen und Spritzgießen in einem Werkzeug (EP 721 831 A1). Außerdem sind noch Kunststoff/Metall-Verbundbauteile bekannt, bei denen Metallbleche durch Rippenstrukturen gestützt werden (EP 370 342 A3).

Bei dem vorliegenden Verfahren werden Verbundbauteile erzeugt, die aus insbesondere hoch festen und hoch steifen Metallkomponenten wie z.B. aus Stahl bestehen, die mit Hilfe eines thermoplastischen Kunststoffes gefügt, in Position gehalten galvanisch von einander getrennt und bevorzugt durch Stützstrukturen in Form von Rippen oder massiven Wänden zusätzlich gestützt werden.

Hochfeste Verbindungen von hoch belastbaren Trägern, Profilen, Platten, etc. findet man häufig im Fahrzeug- oder Maschinenbau. Dabei werden überwiegend Träger aus Stahl oder Aluminium eingesetzt, die in den Fügebereichen miteinander verschweißt oder verklebt sind. Alle in der Großserie befindlichen Metallverbundbauteile sind entweder geschweißt, verschraubt, genietet oder geklebt. Gerade das Schweißen macht oft Schwierigkeiten durch die Unverträglichkeit der Werkstoffe. Eine Verklebung von Metallbauteilen ist aufwändig wegen der Vorbehandlung der Metallteile. Eine sehr rationelle Verbindung zwischen Metallteilen und Kunststoff wird für Leichtbaustrukturen bereits in der Großserie für Pkw-Bauteile eingesetzt. Das Grundprinzip ist in der Deutschen Offenlegungsschrift DE 3.839.855 A1 genau beschrieben. Häufig wird auch das Dämpfungsverhalten bzw. die akustische Abstrahlung bei Gehäusen bemängelt, die durch die Verbindung der Metallteile mit einem Kunststoff verbessert werden kann (z.B. bei Ölwannen oder Ventildeckeln). Außerdem führt die Verbindung unterschiedlicher Metalle, insbesondere bei Anwendung im Nassbereich (z.B. im Motorraum oder Chassisbereich von Fahrzeugen) zu elektrolytischer Korrosion, wenn diese nicht ausreichend gegen Korrosion geschützt sind. Auch durch Abrasionseffekte im Verbindungsbereich kann dieser Defekt auftreten.

Die mit üblichen Fügeverfahren oder durch Schweißen hergestellten Verbundbauteile haben also den Nachteil, dass der direkte Kontakt von Metall zu Metall zu Korrosion und damit zum Versagen eines solchen Verbundbauteiles führen kann.

Der Erfindung liegt daher die Aufgabe zugrunde, ein Verbundbauteil der eingangs erwähnten Art zu schaffen, das sowohl hoch feste und hoch steife Verbindungen von metallischen Trägern und Platten ermöglichen als auch eine wirtschaftliches Fügen von Halbzeugen und Bauteilkomponenten zu Bauteilen erlauben. Es sind zum Beispiel Gehäuse bzw. Strukturteile aus unterschiedlichen Metallen, z.B. hochfestem Stahlblech in Verbindung mit Aluminiumblechen oder Magnesium Druckgussteilen zu verbinden, wobei die elektrolytische Korrosion vermieden werden soll und eine formschlüssige Verbindung mit oder ohne Durchbrüche in den Metallteilen bei einer ausreichenden Kraftübertragung ermöglicht wird. Außerdem ist eine thermische und akustische Entkopplung der zu verbindenden Metallteile wünschenswert. Dabei soll durch die Zwischenschicht aus thermoplastischem Kunststoff eine galvanische Trennung der verbundenen Metallteile ermöglicht und eine eventuelle Korrosion vermieden.

Diese Aufgabe wird erfindungsgemäß dadurch gelöst, dass zum Verbinden der metallischen Formteile thermoplastischer Kunststoff verwendet wird, der die metallischen Formteile formschlüssig miteinander verbindet und gleichzeitig eine elektrische Isolatorschicht ausbildet.

Gegenstand der Erfindung ist ein Kunststoff-Metallverbundbauteil aus wenigstens zwei metallischen Formteilen, die durch angespritzten thermoplastischen Kunststoff miteinander verbunden sind, dadurch gekennzeichnet, dass im Bereich der Verbindungsstelle der Formteile die Formteile mit dem Kunststoff einen Formschluss bilden, dass die Formteile keinen direkten Kontakt miteinander haben, und dass der Kunststoff eine elektrisch isolierende Schicht zwischen den Formteilen bildet.

Bevorzugt bestehen die miteinander verbundenen Formteile aus verschiedenen Metallen oder Metalllegierungen.

Besonders bevorzugt bestehen die metallischen Formteile aus Stahl, Nickel, Chrom, Kupfer, Zink, Titan, Aluminium oder Magnesium oder aus möglichen Legierungen der genannten Metalle.

Als thermoplastischer Kunststoff kann ein unverstärkter oder verstärkter oder gefüllter Kunststoff z.B. auf Basis von Polyamid (PA), Polyester, insbesondere Polyethylenterephthalat (PET), Polybutylenterephthalat (PBT), Polyolefin, insbesondere Polypropylen (PP), Polyethylen (PE), Styrol-acrylnitril-copolymer insbesondere Acrylnitril-Styrol-butadiencopolymer (ABS), Polycarbonat (PC), Polypropylenoxid (PPO), (PSO), Polyphenylensulfid (PPS), Polyimid (PI), (PEEK) oder aus einer möglichen Mischung dieser Kunststoffe bestehen.

Als besonders vorteilhaft hat sich ein Verbundbauteil erwiesen, bei dem in den Metallformteilen an übereinander liegenden Stellen, Durchbrüche oder Bohrungen vorgesehen sind durch die der thermoplastische Kunststoff hindurchragt und an denen der thermoplastische Kunststoff verankert ist.

Zusätzlich oder alternativ können in einer weiteren bevorzugten Variante des Verbundbauteils in den Metallformteilen an übereinander liegenden Stellen, Verformungen, insbesondere Sicken oder Wulste, vorgesehen sein, an denen der thermoplastische Kunststoff verankert ist.

Weiterer Gegenstand der Erfindung ist daher ein Verfahren zur Herstellung eines erfindungsgemäßen Verbundbauteiles, dadurch gekennzeichnet, dass zwei oder mehr Metallformeile in ein Spritzgießwerkzeug eingelegt und dabei auf Abstand gehalten werden und anschließend die Anschlussstelle der Metallformeile im Spritzgießwerkzeug von thermoplastischem Kunststoff ganz oder teilweise umspritzt wird, wobei der thermoplastische Kunststoff den Zwischenraum der Metallformteile ausfüllt.

Bevorzugt ist ein Verfahren bei dem offene Metallprofile verwendet werden und in den offenen Profilen beim Anspritzen des thermoplastischen Kunststoffs Verstärkungsstreben erzeugt werden.

Zur Verbesserung der Steifigkeit offener Profile werden in einem besonders bevorzugten Verfahren beim Anspritzen des thermoplastischen Kunststoffs im Bereich der Anschlussstelle zusätzliche Verstärkungsstreben erzeugt.

Da der Fügeprozess über ein thermisches Umformen der thermoplastischen Komponente erreicht wird, kann die Schwindung des thermoplastischen Kunststoffes zum Aufbau von Spannungen genutzt werden, die für einen dauerhaften und festen Verbund im Bereich der Verbindungsstelle der Metallformteile sorgen.

In das Verbundbauteil können darüber hinaus weitere zusätzliche Elemente integriert werden, die mechanische Funktionen wie z.B. das Abstützen von zusätzlichen Platten oder Trägern, das Befestigen von nachträglich anzubringenden Teilen oder die Aufnahme von weiteren Bauteilen erfüllen. Diese integrierten Elemente können einerseits mit Hilfe von formschlüssig eingefügten weiteren Elementen aus hoch festen Werkstoffen und andererseits durch Anformen von Sicken, Aussparungen oder Schraubendomen mittels thermoplastischer Komponente hergestellt werden.

Die mit der Erfindung erzielten Vorteile können wie folgt zusammengefasst werden:

Die Erfindung ermöglicht den Aufbau von dauerhaft hoch festen und hoch steifen Knoten und Verbundbauteilen unter Verwendung von einfach gestalteten Halbzeugen aus miteinander z.B. durch Schweißen nicht verbindbaren Metallen. Hierdurch wird insbesondere bei Einsatz in feuchter Umgebung (Fahrzeugbau) die elektrochemische Korrosion an den Kontaktstellen vermieden.

Es ist das gleichzeitige Fügen von mehreren Fügestellen innerhalb eines Spritzgießwerkzeuges möglich.

Die Gestaltung von Verbundbauteilen kann hinsichtlich Kosten und Gewicht optimiert werden

Weiterer Gegenstand der Erfindung ist die Verwendung der erfindungsgemäßen Verbundbauteile in entsprechender Gestaltung als Konstruktionselement für Maschinen, Fahrzeug und Bauteile aller Art, insbesondere für Kraftfahrzeuge, für Elektronikartikel, Haushaltsartikel und für den Baubedarf.

Besonders geeignete Anwendungen des Verbundbauteils sind Strukturteile für Kraftfahrzeuge, insbesondere Türen, Stoßfänger, Träger, Front- und Heckteile für Pkws, Türschwellertragrahmen sowie Dekorationselemente, welche eine erhöhte Festigkeit mit anderen Materialeigenschaften verbinden.

Die Erfindung wird nachstehend anhand von Figuren näher erläutert, ohne dass dadurch die Erfindung im Einzelnen eingeschränkt wird.

### Es zeigen:

- Fig.1: ein Verbundbauteil mit zwei Verstärkungselementen 3, 3' zur Verbindung von zwei Rechteckprofilen verbunden durch einen angespritzten Thermoplasten
- Fig. 1a, 1b: vergrößerte Teilansichten der Struktur 1 nach Fig. 1 im Querschnitt
- Fig. 2: ein Verbundbauteil ähnlich Fig. 1 mit einer zusätzlichen Verstärkungskante
- Fig. 3: ein Verbundbauteil ähnlich Fig. 1 mit einer Verbindung durch aufgeschrumpfte thermoplastische Formteile 4, 5
- Fig. 4: ein Verbundbauteil ähnlich Fig. 1 jedoch ohne seitliche Rippenstrukturen am Thermoplasten und mit einteiligem Verstärkungselement 3
- Fig. 5: das Verbundbauteil nach Fig. 4

### Beispiele

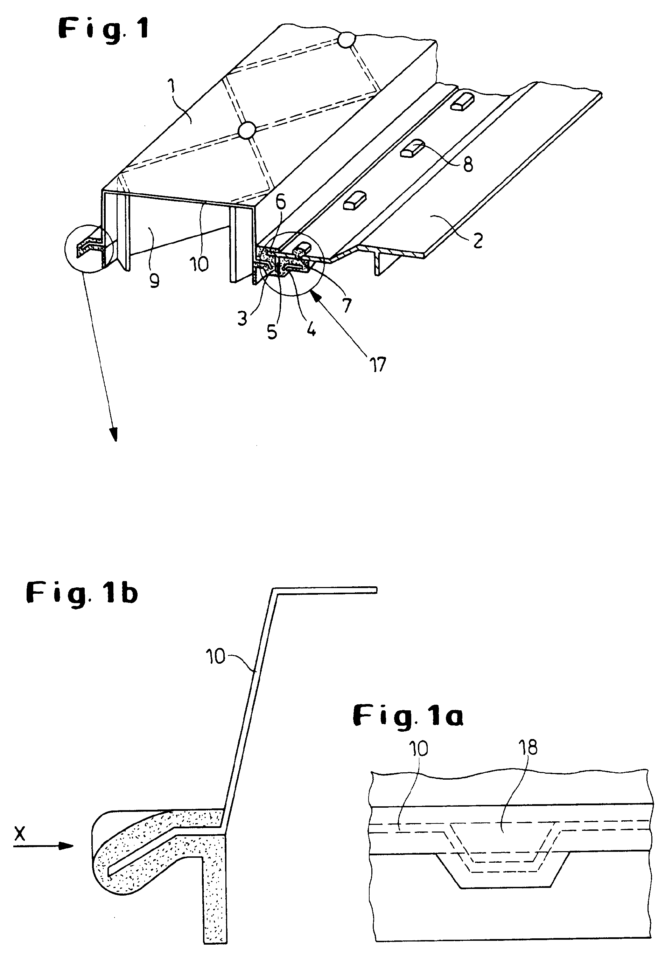

Die Figur 1 zeigt eine Kunststoff-Metall-Hybridstruktur 1 (aus einem verrippten thermoplastischen Kunststoffteil 9 und einem Stahlblech 10), die mit einer Aluminium- oder Magnesium-Druckguss-Abdeckung 2 (Rahmen 2) oder auch alternativ einer durch Tiefziehen und Stanzen hergestellten Abdeckung (Rahmen) verbunden ist. Die Verbindung der unterschiedlichen Metallteile erfolgt in der Art und Weise, dass sich die Metalle (hier Stahl und Aluminium bzw. Magnesium) nicht direkt berühren, um elektrolytische Korrosion zu vermeiden. In Fig. 1 erfolgt die Verbindung über den angespritzten thermoplastischen Kunststoff 3, indem im Blech 10 ein gestanztes Loch mit Bördelrand 4 einen angegossenen Zapfen 5 von Teil 2 ohne Berührung aufnimmt und der Kunststoff die Kante 6 von Teil 2 umklammert. Da der Kunststoff auch die Bördelkante 4 umklammert, sind beide Teile formschlüssig verbunden. Weitere Durchbrüche 7 im Teil 2 ermöglichen eine Verklammerung zwischen Teil 1 und Teil 2 über den Kunststoff durch entsprechende Nietkopfverbindungen 8 im Spritzgießen.

Die Figur 1a zeigt die Verbindung zwischen Kunststoffteil 9 und einem Stahlblech 10 im Flanschbereich in der Art, dass eine Sicke 18 die kraft- und formschlüssige Verbindung zwischen Kunststoffteil und Stahlblech erzeugt.

Die Fig. 1b zeigt den Schnitt durch die Sicke 18 von Fig. 1 a.

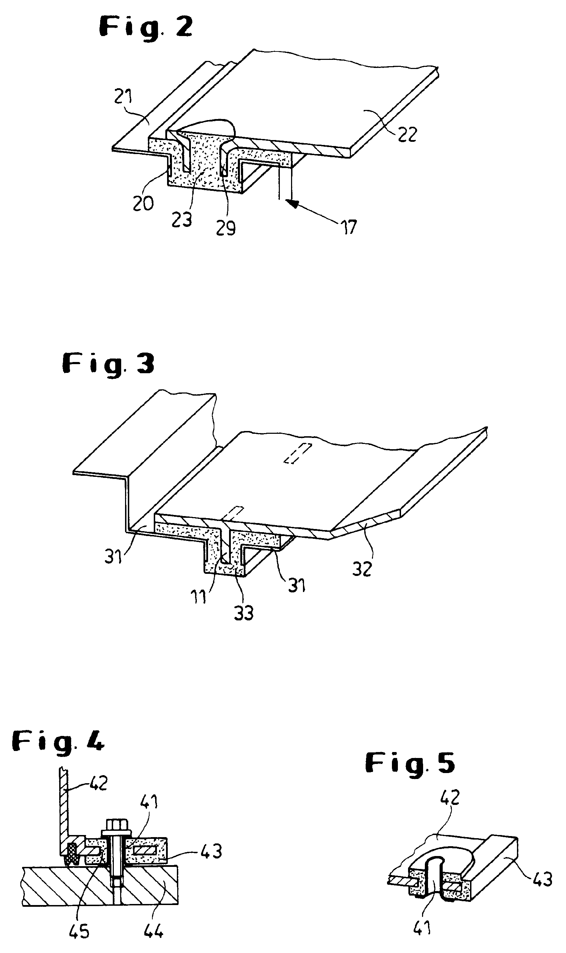

Eine weitere Möglichkeit ist in Fig. 2 zu sehen, bei der das Teil 22 einen angeformten Hohlzapfen 29 aufweist, der in die gebördelte Öffnung 20 des Teiles 21 berührungslos eintaucht. Auch hier wird Teil 21 und Teil 22 über den Kunststoff 23 verbunden.

In Fig. 3 erfolgt die Verbindung zwischen Teil 31 und Teil 32 ebenfalls über den Kunststoff 33, allerdings weist Teil 32 keine Durchbrüche und auch keine Kantenumspritzung im Verbindungsbereich auf. Teil 32 weist Zapfen oder Stege 11 auf, die eine chemische Oberflächenbehandlung aufweisen bzw. mit einem Haftvermittler versehen sind oder eine Oberflächenstruktur aufweisen, so dass eine Haftung zwischen Kunststoff und Metall entsteht, die neben den Schrumpfkräften eine zusätzliche Verankerung am Metall ermöglicht.

Zug-Scher-Versuche an behandelten Prüfkörpern aus einem Aluminium-Kunststoff-Verbund der oben gezeigten Art zeigen hohe Festigkeitswerte, besonders in Verbindung mit PA-GF (Polyamid glasfaserverstärkt). Diese Werte sind auch mit Magnesium bzw. Aluminium-Mg-Legierungen zu erreichen.

In Fig. 4 wird die Befestigung des Magnesium/Aluminium-Gehäuses 42 ausschnittsweise dargestellt. Hierbei wird eine korrosionsgeschützte Stahlhülse 41 über den Kunststoff 43 in das Mg/AI-Gehäuse 42 eingebettet (Kraft- und Formschluss). Dadurch wird der Kontakt zwischen Metallhülse 41 und Gehäuse 42 unterbunden und das Gehäuse 42 kann konventionell mit einer Stahlschraube auf der Grundplatte 44 befestigt werden.

Die Metallhülse 41 mit kleinem Bund und die große Bohrung 45 im Mg-Gehäuse 42 kann direkt im Spritzgießen eingebettet werden, weil die Metallhülse 41 durch die Bohrung 45 des Mg-Gehäuses 42 hindurch in einem Spritzgießwerkzeug justiert werden kann, so dass ein konstanter Hohlraum für die Aufnahme der Kunststoffkomponente 43 entsteht. Die Kunststoffkomponente 43 verbindet die Metallhülse 41 formschlüssig mit dem Mg-Gehäuse 42.

Es ist aber auch möglich, nur die Kunststoffhülsen 43 an das Mg-Gehäuse 42 anzuspritzen und später die Metallhülsen 41 in die Kunststoffhülse einzubördeln. Die Metallhülse 41 ermöglicht eine metrische Verschraubung ohne zu große Verluste im Anzugsmoment, so dass die Schraubensicherung gewährleistet ist.

## Patentansprüche

1. Kunststoff-Metallverbundbauteil aus wenigstens zwei metallischen Formteilen (1; 21; 31; 41) und (2; 22; 32; 42), die durch angespritzten thermoplastischen Kunststoff (3) miteinander verbunden sind, **dadurch gekennzeichnet, dass** im Bereich der Verbindungsstelle (17) der Formteile (1; 21; 31; 41) und (2; 22; 32; 42) die Formteile (1; 21; 31; 41) und (2; 22; 32; 42) mit dem Kunststoff (3) einen Formschluss bilden, dass die Formteile (1; 21; 31; 41) und (2; 22; 32; 42) keinen direkten Kontakt miteinander haben, und dass der Kunststoff (3) eine elektrisch isolierende Schicht zwischen den Formteilen (1; 21; 31; 41) und (2; 22; 32; 42) bildet.

2. Verbundbauteil nach Anspruch 1, **dadurch gekennzeichnet, dass** die Formteile (1; 21; 31; 41) und (2; 22; 32; 42) aus verschiedenen Metallen oder Metalllegierungen bestehen.

3. Verbundbauteil nach einem der Ansprüche 1 bis 2, **dadurch gekennzeichnet, dass** die metallischen Formteile (1; 21; 31; 41) und (2; 22; 32; 42) aus Stahl, Nickel, Chrom, Kupfer, Zink, Titan, Aluminium oder Magnesium oder aus Legierungen der genannten Metalle bestehen.

4. Verbundbauteil nach einem der Ansprüche 1 bis 3, **dadurch gekennzeichnet, dass** in den Metallformteilen (1; 21; 31; 41) und (2; 22; 32; 42) an übereinander liegenden Stellen, Durchbrüche oder Bohrungen vorgesehen sind, durch die der thermoplastische Kunststoff (3) hindurchragt und an denen der thermoplastische Kunststoff (3) verankert ist.

5. Verbundbauteil nach einem der Ansprüche 1 bis 4, **dadurch gekennzeichnet, dass** die verbundenen Metallformteile (1; 21; 31; 41) und (2; 22; 32; 42) an übereinander liegenden Stellen, Verformungen, insbesondere Sicken oder Wulste aufweisen, an denen der thermoplastische Kunststoff (3) verankert ist.

6. Verbundbauteil nach einem der Ansprüche 1 bis 5, **dadurch gekennzeichnet, dass** die Metallformteile (1; 21; 31; 41) und (2; 22; 32; 42) offene Profile sind, in denen durch den thermoplastischen Kunststoff (3) zusätzliche Verstärkungsstreben gebildet werden.

7. Verbundbauteil nach einem der Ansprüche 1 bis 6, **dadurch gekennzeichnet, dass** als thermoplastischer Kunststoff (3) ein unverstärkter oder verstärkter oder gefüllter Kunststoff bevorzugt auf Basis von Polyamid (PA), Polyester, insbesondere Polyethylenterephthalat (PET), Polybutylenterephthalat (PBT), Polyolefin, insbesondere Polypropylen (PP), Polyethylen (PE), Styrol-acrylnitril-copolymer insbesondere Acrylnitril-Styrol-butadiencopolymer (ABS), Polycarbonat (PC), Polypropylenoxid (PPO), (PSO), Polyphenylensulfid (PPS), Polyimid (PI), (PEEK) oder aus eine mögliche Mischung dieser Kunststoffe verwendet wird.

8. Verfahren zur Herstellung eines Verbundbauteiles nach einem der Ansprüche 1 bis 7, **dadurch gekennzeichnet, dass** zwei oder mehr Metallformeile (1; 21; 31; 41) und (2; 22; 32; 42) in ein Spritzgießwerkzeug eingelegt und dabei auf Abstand gehalten werden und anschließend die Anschlussstelle der Metallformeile (1; 21; 31; 41) und (2; 22; 32; 42) im Spritzgießwerkzeug von thermoplastischem Kunststoff (3) ganz oder teilweise umspritzt wird, wobei der thermoplastische Kunststoff (3) den Zwischenraum der Metallformeile (1; 21; 31; 41) und (2; 22; 32; 42) ausfüllt.

9. Verfahren nach Anspruch 1, **dadurch gekennzeichnet, dass** als Metallformteile (1; 21; 31; 41) und (2; 22; 32; 42) offene Metallprofile verwendet werden und in den offenen Profilen beim Anspritzen des thermoplastischen Kunststoffs zusätzliche Verstärkungsstreben aus thermoplastischem Kunststoff erzeugt werden.

10. Verwendung des Verbundbauteiles nach einem der Ansprüche 1 bis 9 als Konstruktionselement für Maschinen, Fahrzeug und Bauteile aller Art, insbesondere für Kraftfahrzeuge, für Elektronikartikel, Haushaltsartikel und für den Baubedarf.

11. Verwendung des Verbundbauteiles nach einem der Ansprüche 1 bis 9 als Strukturteil für Kraftfahrzeuge, insbesondere Ventildeckel, Ölwannen, Motorhalterungen, Türen, Stoßfänger, Träger, Front- und Heckteile für Pkws, Türschwellertragrahmen sowie Dekorationselemente.
